# FASCICULE DE BREVET EUROPEEN

(11) **EP 3 862 099 B1**
(45) Date de publication et mention de la délivrance du brevet: **10.04.2024**
(21) Numéro de dépôt: 21155232.8
(22) Date de dépôt: 04.02.2021
(51) Int. Cl.: B05C 5/02, B05C 11/10, B25J 9/16, G05B 13/02

(54) **PROCÉDÉ ET DISPOSITIF DE DÉPOSE D'UN CORDON D'UN FLUIDE VISQUEUX À HAUTE VITESSE**
VERFAHREN UND VORRICHTUNG ZUM VERLEGEN EINES BANDES AUS EINER VISKOSEN FLÜSSIGKEIT MIT HOHER GESCHWINDIGKEIT
METHOD AND DEVICE FOR DEPOSITING A SEAM OF VISCOUS FLUID AT HIGH SPEED

(30) Priorité: 07.02.2020 FR 2001238
(43) Date de publication de la demande: 11.08.2021
(73) Titulaire: Fives Filling & Sealing, 44140 Le Bignon (FR)
(72) Inventeur: LE COINTRE, Vincent, 44120 LE BIGNON (FR); POUPARD, Benjamin, 44120 LE BIGNON (FR); LOQUIN, François, 44120 LE BIGNON (FR)
(74) Mandataire: Novagraaf Group

(56) Documents cités:
- EP-A1- 2 145 691
- DE-A1- 4 034 291
- DE-A1-102016 007 586
- US-A- 5 292 066

## Description

La présente invention concerne un procédé et un dispositif de dépose à haute vitesse d'un cordon d'un fluide visqueux, notamment une colle, un adhésif ou un matériau d'étanchéité à haute viscosité, sur un support de pose. Le dispositif comprend une tête de dépose comportant une buse d'extrusion pour la dépose du cordon de fluides visqueux, tel que de la colle, du mastic, sous la forme de cordons continus ou discontinus. La tête de dépose ou le support de pose sont entrainés suivant une trajectoire de dépose déterminée définissant une trajectoire de dépôt du cordon. L'invention trouve notamment une application dans le domaine automobile pour la dépose de cordon de joint ou de colle pour la miroiterie, ou encore à tout domaine dans lequel un assemblage d'éléments par collage est requis ou d'application de matériaux d'étanchéité à haute cadence.

Pour simplifier la description de l'invention, nous décrirons par la suite son application au dépôt d'un cordon de colle, la tête de dépose étant fixe et le support le pose étant mobile, sans que celle-ci ne soit limitative.

L'assemblage par collage est largement répandu dans le domaine automobile pour le montage des éléments de miroiterie tels que les vitres des voitures. Il est généralement associé à une unité robotique pour garantir l'uniformité des dépôts et la qualité des cordons de colle pour les productions à cadence élevée. L'unité robotique comprend un bras poly-articulé qui porte le support à encoller et le déplace sous un système d'extrusion de colle. La colle est alors distribuée sur le support à travers une buse d'extrusion pendant que le support est déplacé selon une trajectoire prédéterminée. Une autre méthode consiste à déplacer la buse d'extrusion au-dessus du support à encoller.

A chaque support correspond une trajectoire spécifique définie par un certain nombre de points de passage de la buse sur le support. Ces points de passage sont programmés dans un système de contrôle du bras poly-articulé, ainsi que la distance à respecter entre le support et la buse à ces points de passage. Pour arriver à une trajectoire fine et précise, il est nécessaire d'augmenter le nombre de points de passage prédéterminés. Cette multiplication de points défavorise la vitesse de déplacement du support par le bras poly-articulé dont l'unité de contrôle recalcule les trajectoires et les vitesses entre chaque point de passage.

Pour réaliser la distribution de colle, le système de dépose utilise des pompes de dépotage et de dosage pour alimenter la buse d'extrusion. La puissance et le débit de ces pompes sont déterminés par la viscosité des colles utilisées et la taille désirée de cordon. Afin de déposer un cordon de colle conforme à la trajectoire définie et de qualité uniforme sur toute la longueur de dépose, les solutions actuelles se basent sur le débit de la pompe de dosage pour déterminer la vitesse du bras poly-articulé et donc la vitesse de dépose. Idéalement, le débit de la pompe est réglé en fonction d'une vitesse sensiblement constante de déplacement. Néanmoins la vitesse de déplacement n'est jamais constante puisque le bras poly-articulé change de vitesse dans les phases de démarrage, d'arrêt et dans les courbes. Pour pallier cela, il est donc connu de faire varier le débit proportionnellement à la vitesse de déplacement du support, ou de la buse d'extrusion, comme dans le document US48996274A. Cependant, cette solution ne permet pas d'obtenir des vitesses moyennes élevées de déplacement attendues par les industriels pour diminuer les temps de cycles des opérations d'encollage. Aujourd'hui, les vitesses moyennes attendues sont de l'ordre de 300-400 mm/seconde avec des vitesses constantes en courbe entre 250 et 300 mm/seconde.

EP 2 145 691 A1 décrit un procédé de dépose d'un cordon sur un support à l'aide d'une buse.

DE 40 34 291 A1 divulgue un dispositif de dépose de colle sur un pare-brise.

Selon son abrégé, DE 10 2016 007586 A1 décrit un dispositif pour appliquer ou générer automatiquement et contrôler une structure à appliquer sur un substrat, de préférence un cordon adhésif, une piste adhésive, un joint adhésif, un joint d'étanchéité, un profil en mousse, un profil sans fin, un profil géométrique, en particulier un profil en forme de cylindre ou un profil triangulaire, ou un cordon de soudure.

L'invention a pour objet de remédier au moins partiellement à ces problèmes. Elle vise notamment à proposer un procédé et un dispositif de dépose d'un cordon d'un fluide visqueux sur un support à haute vitesse d'application.

A cet effet, l'invention concerne un procédé selon la revendication 1.

Selon des modes particuliers de réalisation, le procédé de dépose comprend l'une ou plusieurs caractéristiques correspondant aux revendications 2 à 7, prise(s) isolément ou selon toutes les combinaisons possibles.

L'invention concerne aussi un dispositif selon la revendication 8.

Selon un mode particulier de réalisation, le dispositif comprend les caractéristiques de la revendication 9.

L'invention concerne également un produit programme d'ordinateur selon la revendication 10.

Les caractéristiques et avantages de l'invention apparaîtront à la lecture de la description qui va suivre, donnée uniquement à titre d'exemple, et non limitative, en référence aux dessins annexés, sur lesquels les figures sont des représentations schématiques d'un exemple de réalisation d'un dispositif de dépose d'un cordon d'un fluide visqueux selon l'invention et dont le fonctionnement illustre un exemple de procédé selon l'invention.

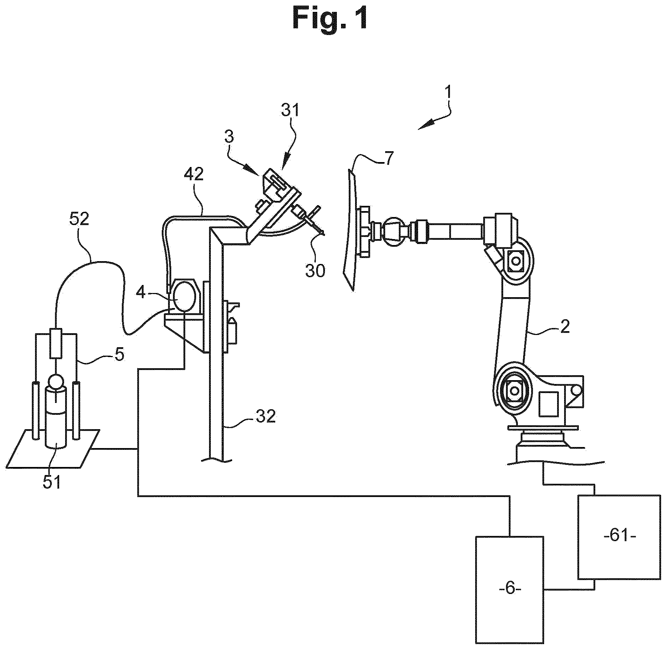

- La figure 1 est un exemple de dispositif de dépose d'un cordon selon l'invention,
- La figure 2 est une vue schématique en coupe longitudinale d'une buse d'extrusion,
- La figure 3 est une vue schématique en section transversale d'un cordon,
- La figure 4 est une illustration d'un exemple de système de compensation axiale adapté au système de dépose selon l'invention,
- La figure 5 est un exemple de trajectoire de dépose sur un support,
- La figure 6 est un diagramme d'étapes du procédé de dépose selon l'invention,
- La figure 7 est une représentation de relevés de vitesses et des consignes corrigées selon l'invention.

Les figures illustrent un exemple d'application de l'invention dans le secteur automobile et en particulier pour la dépose d'un cordon de colle sur un panneau vitré sur une chaine de montage (non représentée) de véhicules automobiles. L'invention s'applique néanmoins à tous les secteurs impliquant la dépose d'un cordon de fluide visqueux, par exemple de colle, d'adhésif ou de matériau d'étanchéité, notamment sur des panneaux vitrés ou non.

Le dispositif de dépose 1 d'un cordon de colle comprend un bras poly-articulé 2, un système de dépose 3 du cordon supporté par une potence 32 et une pompe de dépotage 5 alimentant une pompe de dosage 4. Ces éléments sont pilotés à partir d'un système de contrôle 6. Celui-ci contrôle notamment les variateurs des pompes 4 et 5, une baie de commande 61 du bras poly-articulé 2 et le pilotage de vannes de distribution de la colle (non représentées) du système de dépose 3.

A partir de fûts 51 de fluides visqueux tels que de l'adhésif, de la colle ou des matériaux d'étanchéité et à travers de tuyaux d'alimentation 52, 42, la pompe de dépotage 5 fournit de la colle la pompe de dosage 4 qui la transfère au système de dépose 3. Le bras poly-articulé est muni d'un préhenseur 21 non représenté destiné à saisir un support 7 à encoller et le présenter au système de dépose 3, lequel comprend une buse d'extrusion 30 qui applique la colle sur le support 7 sous forme d'un cordon 71.

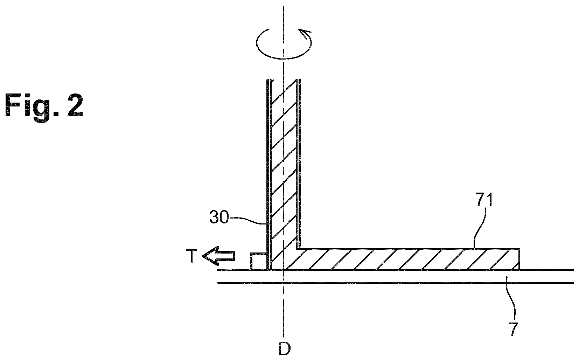

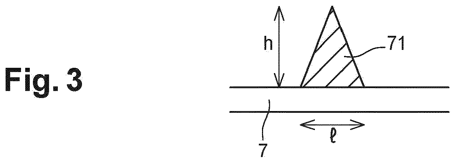

Pendant la phase de distribution ou d'encollage, la buse 30 est préférentiellement perpendiculaire au support à encoller 7. Le mouvement relatif de la buse 30 par rapport au support 7 définit une trajectoire T de dépôt de colle. La buse 30 comprend une ouverture sous une face d'extrémité libre laquelle face est orientée vers le support à encoller pendant la phase d'encollage (fig. 2). Préférentiellement, la buse 30 comprend également une sortie latérale, généralement de forme triangulaire pour obtenir un cordon 71 de section sensiblement triangulaire (fig. 3) de hauteur h et de largeur l. Cette sortie latérale est dirigée dans la direction du cordon d'adhésif ou de colle et sur la trajectoire T. Pendant la phase d'encollage, la face d'extrémité libre de la buse 30 est en contact, direct ou indirect, avec le support 7.

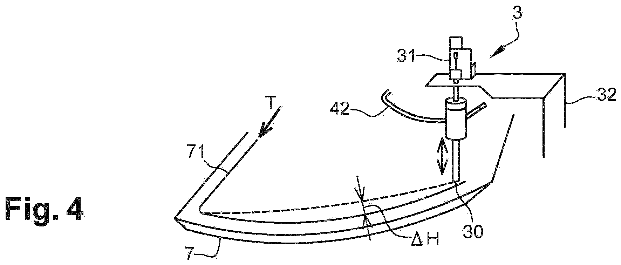

Avantageusement, le système de dépose 3 comprend un système de compensation axiale 31 permettant à la buse 30 de rester au contact du support 7 lors de la dépose du cordon 71. La figure 4 présente une vue schématique la buse 30 accouplée au système de compensation axiale 31. La compensation permet de s'affranchir des défauts sur le support 7 et des erreurs de programmation de distance H entre le la buse 30 et le support 7. Cela permet également de simplifier la programmation des coordonnées de passage du bras poly-articulé sous la buse d'extrusion 30. En plus de la compensation axiale, la buse 30 a la faculté d'être mobile en rotation selon l'axe D. Avantageusement, cette faculté de rotation permet d'orienter la sortie latérale de la buse 30 pour accompagner la réalisation de la trajectoire T. Cette rotation peut être considérée comme un axe supplémentaire d'orientation pour le dispositif de dépose 1 d'adhésif.

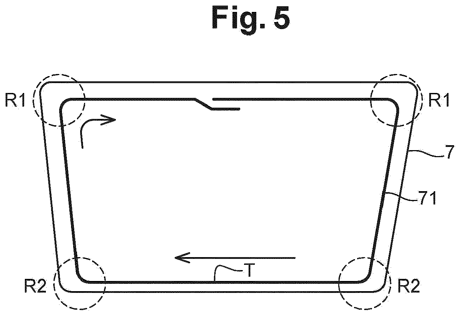

La trajectoire T, illustrée en figure 5 comprend des lignes droites et des virages. Les vitesses de déplacement du support sur la trajectoire T peuvent dépasser les 850 mm/sec au niveau de la buse 30. Les vitesses maximums sont réalisées en ligne droite tandis que les vitesses dans les courbes sont réduites, dépendantes du rayon de courbure R1, R2. Plus le rayon est grand, plus la vitesse est élevée, par exemple 300 mm/sec pour un rayon R2 de 16 mm. Avec des supports 7 de forme anguleuse, le rayon de courbure R1 de 12 mm oblige à réduire la vitesse à 250 mm/sec. La vitesse en courbe peut varier par exemple de 150 à 450 mm/sec. Selon l'invention, l'alternance de vitesses est anticipée et le système de dépose 3 et la pompe de dosage 4 délivrent la quantité nécessaire de colle pour obtenir une qualité de cordon 71 homogène. Avantageusement, la faculté de rotation de la buse 30 permet de réaliser des virages à faible rayon de courbures à des vitesses sensiblement plus élevées qu'un système standard de dépose de matériau à haute viscosité.

Dans un exemple de réalisation de l'invention, une trajectoire T adaptée au support 7 est programmée par un opérateur pour réaliser la dépose d'un cordon 71. Il y associe des paramètres de vitesse pour réaliser cette dépose dans un temps imparti avec une vitesse moyenne cible, par exemple supérieure ou égale à 600 mm/sec. L'opérateur utilise les capacités du bras poly-articulé 2 et maximise les vitesses en ligne droite et en courbe en fonction des capacités de la pompe de dosage 4. Une inadéquation entre vitesse et débit de pompe de dosage 4 aboutit à réaliser des sections de cordons trop épaisses ou trop fines. Par exemple, une vitesse trop grande avec un débit trop faible donne une petite section de cordon 71. Il faut donc asservir le débit de la pompe de dosage 4 à la vitesse du bras poly-articulé 2 pour obtenir la section désirée de cordon, par exemple de largeur l = 8 mm et de hauteur h = 14 mm.

Pour réaliser une section de cordon 71 de qualité avec une bonne uniformité, la pompe de dosage 4 doit envoyer la quantité nécessaire de colle à la buse d'extrusion 30 sur toute la trajectoire T. La quantité de colle à distribuer dépend de la section du cordon 71 et de la vitesse V de déplacement relatif de la buse 30 par rapport au support 7. Sur une pompe de dosage 4 capacitaire en débit, on calcule la relation A entre le débit de la pompe de dosage 4 et le besoin de débit au niveau de la buse 30. Cette relation A permet d'ajuster le débit de la pompe 4 à la vitesse V relative de déplacement de la buse 30. Une fois définie, cette relation A est fixée sur la durée de la dépose.

Parallèlement, il faut noter que les installations de dépose de colle possèdent un délai de réponse B entre le moment où la consigne de débit est envoyée à la pompe de dosage 4 et le moment où la colle sort de la buse 30. Ce délai est dû notamment au temps de traitement et de communication du système de contrôle 6 avec les sous-éléments mais également en raison de l'élasticité des tuyaux présents sur le circuit d'alimentation 42. Le procédé selon l'invention prend donc en compte ce paramètre lors de l'envoi des consignes à la pompe de dosage 4.

Les vitesses théoriques V programmées pour le bras poly-articulé ne sont pas les vitesses réelles Vr observées lors du déplacement du support 7 au niveau de la buse 30. Le bras poly-articulé est commandé par un logiciel d'exploitation qui peut adapter la programmation de la trajectoire T en fonction des capacités du bras- poly-articulé, notamment en termes de vitesse, charge, mobilité, réactivité..., et du poids du support 7. Le procédé selon l'invention comprend donc une étape d'apprentissage de ces vitesses réelles Vr. Un cycle de dépose est démarré pour réaliser le déplacement du support 7 sous la buse 30 mais sans l'activation de la pompe de dosage 4. Le système de contrôle 6 enregistre les vitesses Vr dans un fichier. Pour avoir une retranscription fidèle des vitesses réelles Vr sur toute la trajectoire T, on définit un nombre N de points sur la trajectoire T pour lesquels la vitesse Vr est relevée. Avantageusement, les vitesses Vr sont relevées selon une fréquence F inférieure à 100 ms. Préférentiellement, la fréquence F d'acquisition est inférieure à 30 ms. L'opérateur vérifie ensuite le relevé de vitesses Vr et adapte la programmation pour atteindre la vitesse moyenne souhaitée sur le cycle.

Dans l'étape suivante du procédé selon l'invention, pour chaque point de relevé est appliqué d'une part la relation A qui détermine le débit attendu pour la vitesse Vr de ce point et d'autre part le délai de réponse B. Cela permet de définir les consignes à envoyer à la pompe de dosage 4 en fonction de chaque point de relevé sur la trajectoire T. Un cycle de dépose complet est lancé pour réaliser la dépose du cordon 71 sur le support 7.

Une étape de vérification de la dépose permet d'ajuster les différents paramètres en fonction de la qualité du cordon 71 observé, notamment la quantité de colle dans les courbes. Une quantité trop importante de colle en amont d'une courbe traduit un retard de distribution qu'il faut compenser par une augmentation du délai de réponse B dans les consignes de débit fournies à la pompe de dosage 4. Inversement une quantité trop importante de colle en aval d'une courbe traduit une avance de distribution qu'il faut compenser par une diminution du délai de réponse B dans les consignes de débit fournies à la pompe de dosage 4. Si la section du cordon 71 n'est pas conforme, il est également possible de modifier la relation A pour augmenter ou diminuer la taille générale de la section du cordon 71.

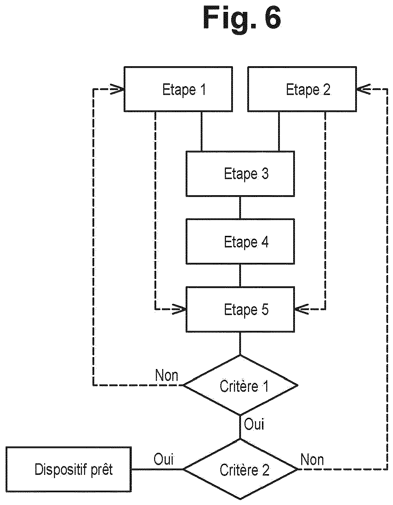

Les étapes du procédé de dépose d'adhésif selon l'invention sont reprises sur le diagramme de la figure 6. L'étape 1 permet de déterminer la relation A entre le débit de la pompe et la vitesse V du support 7 par rapport à la buse d'extrusion 30. L'étape 2 permet de déterminer le délai de réponse B du système de distribution du dispositif 1, notamment le temps de réaction de la pompe de dosage 4. L'étape 3 d'apprentissage est la réalisation de la trajectoire T dans un cycle sans dépose de cordon 71. Conjointement à cette étape 3, l'étape 4 permet d'enregistrer les vitesses Vr réelles de déplacement du support 7 à une fréquence F donnée. L'étape 5 est la réalisation d'un cycle de production avec dépose de cordon 71 en transmettant à la pompe de dosage 4 les consignes de débit prenant en compte les vitesses Vr relevées sur la trajectoire T à la fréquence F pondérées par la relation A et décalées dans le temps de la valeur du délai de réponse B. Un premier critère 1 de vérification du réglage du dispositif 1 est de vérifier la section du cordon 71 déposé. Si le résultat n'est pas conforme, il est possible de corriger la valeur de la relation A à l'étape 1. Si le critère 1 est validé, on vérifie le critère 2 qui correspond au délai de réponse B, dont le résultat est observable en courbe. Si le critère 2 n'est pas satisfaisant, la valeur du délai de réponse B est modifiée à l'étape 2. Après avoir modifié les valeurs dans l'étape 1 et/ou l'étape 2, on reprend le procédé selon l'invention à l'étape 5 avec un cycle de production pour constater le résultat de la correction. Dans une variante de réalisation de l'invention, les étapes 3 et 4 peuvent être réaliser avant les étapes 1 et 2.

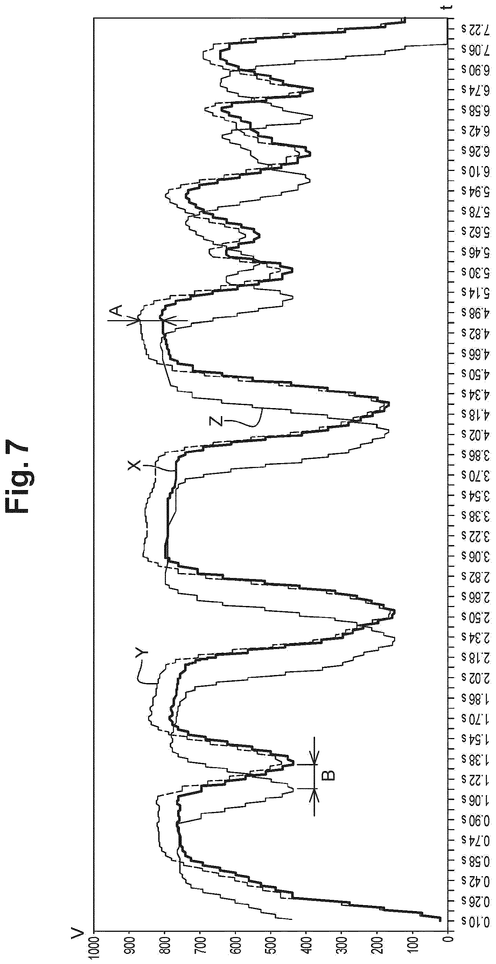

Un exemple de relevé de vitesses réelles Vr du support 7 selon une trajectoire T est représenté par la courbe Y de la figure 7 dont l'abscisse représente le temps en secondes et l'ordonnée la vitesse en mm/sec. La courbe X représente les consignes qui seraient envoyées à la pompe de dosage 4 selon une pondération par la relation A de la vitesse relevée. La courbe Z représente les consignes prenant en compte le délai de réponse B.

L'invention concerne également un produit programme d'ordinateur comprenant des instructions qui conduisent le dispositif de dépose 1 selon l'invention à exécuter les étapes du procédé selon l'invention. Ce produit programme d'ordinateur est par exemple le système de contrôle 6 qui permet de piloter les éléments du dispositif de dépose 1.

Les éléments techniques et étapes présentés ci-dessus contribuent à la mise en oeuvre par le dispositif 1 du procédé de dépose de cordon à haute viscosité selon l'invention pour réaliser la dépose sur le support 7 à des vitesses moyennes supérieures à 600 mm/sec.

## Revendications

1. Procédé de dépose d'un cordon (71) d'un fluide visqueux sur un support (7) de pose mis en oeuvre par un dispositif de dépose (1) comprenant :
- un robot poly-articulé (2),
- un système de dépose (3) du cordon (71) au moyen d'une buse d'extrusion (30),
- une pompe de dosage (4) alimentant le système de dépose (3) en fluide visqueux,
- un circuit (42) d'alimentation de la buse (30) d'extrusion depuis la pompe de dosage (4),
- un système de contrôle (6) pilotant le robot poly-articulé (2), le système de dépose (3) et la pompe de dosage (4) de sorte de réaliser une dépose du cordon (71) sur le support (7) selon une trajectoire (T) définie pouvant comprendre des longueurs droites et des courbes en un temps prédéterminé, le support (7) étant porté par le robot poly-articulé (2) et bougeant relativement par rapport au système de dépose (3), **caractérisé en ce que** le procédé comprend les étapes suivantes :
- détermination de la relation (A) entre le débit nécessaire à la pompe de dosage (4) et une vitesse (V) de déplacement du support (7) pour obtenir la section du cordon souhaitée,
- détermination d'un délai de réponse (B) du circuit (42) d'alimentation de la buse (30) d'extrusion,
- réalisation d'un cycle initial d'apprentissage, sans dépose de cordon, selon des consignes de trajectoire (T) et de vitesses (V) de déplacement du support (7) pendant lequel on détermine, sur un nombre (N) de points de la trajectoire, une vitesse réelle (Vr) de déplacement du support (7) au niveau de la buse (30),
- réalisation d'un cycle de production, avec dépose d'un cordon avec, en chacun des points (N) de la trajectoire (T), une consigne corrigée de débit de la pompe de dosage (4) prenant en compte le délai de réponse (B) et la vitesse (Vr) réelle de déplacement du support, pondérée par la relation (A).

2. Procédé de dépose d'un cordon (71) selon la revendication 1 **caractérisé en ce qu'**il comprend en outre une étape de vérification de la section du cordon le long de la trajectoire (T) puis une étape de correction éventuelle du délai de réponse (B) du circuit (42) d'alimentation de la buse (30) et/ou du débit de la pompe de dosage (4) en fonction de la vitesse réelle (Vr) de déplacement du support (7) pour la réalisation du prochain cycle de production.

3. Procédé de dépose d'un cordon (71) selon la revendication 1, la buse (30) ayant un orifice d'extrusion permettant de réaliser un cordon de section sensiblement triangulaire et étant orientable selon un axe longitudinal (X) de celle-ci, **caractérisé en ce que** la buse est pilotée en rotation autour de son axe longitudinal (X) lors de la dépose du cordon.

4. Procédé de dépose d'un cordon (71) selon l'une quelconque des revendications précédentes, **caractérisé en ce que** le nombre (N) de points de la trajectoire est définit par une fréquence (F) d'enregistrement du système de contrôle (6), celle-ci étant inférieure à 100 ms et préférentiellement inférieure à 30 ms.

5. Procédé de dépose d'un cordon (71) selon l'une quelconque des revendications précédentes, **caractérisé en ce que** la vitesse moyenne de déplacement du support (7) est supérieure ou égale à 600 mm/sec sur la longueur de la trajectoire (T).

6. Procédé de dépose d'un cordon (71) selon l'une quelconque des revendications précédentes, **caractérisé en ce que** la vitesse réelle (Vr) de déplacement du support (7) est comprise entre 150 mm/sec et 300 mm/sec lorsque la trajectoire (T) a un rayon de courbure de compris entre 12 et 16 mm.

7. Procédé de dépose d'un cordon (71) selon l'une des revendications précédentes, **caractérisé en ce que** la buse d'extrusion (30) est maintenue en contact avec le support (7) pendant la dépose du cordon (71).

8. Dispositif (1) de dépose d'un cordon (71) d'un fluide visqueux sur un support (7), le dispositif (1) comprenant :
- un robot poly-articulé (2),
- un système de dépose (3) du cordon (71) au moyen d'une buse d'extrusion (30),
- une pompe de dosage (4) alimentant le système de dépose (3) en fluide visqueux,
- un circuit (42) d'alimentation de la buse (30) d'extrusion depuis la pompe de dosage (4),
- un système de contrôle (6) configuré pour piloter le robot poly-articulé (2), le système de dépose (3) et la pompe de dosage (4) de sorte de réaliser une dépose du cordon (71) sur le support (7) selon une trajectoire (T) définie pouvant comprendre des longueurs droites et des courbes en un temps prédéterminé, le support (7) étant porté par le robot poly-articulé (2) et bougeant relativement par rapport au système de dépose (3),
le dispositif (1) étant configuré pour mettre en oeuvre un procédé de dépose d'un cordon selon l'une quelconque des revendications précédentes.

9. Dispositif (1) de dépose d'un cordon (71) selon la revendication 8, **caractérisé en ce que** le système de dépose (3) comprend un système de compensation axiale (31) de sorte de maintenir la buse d'extrusion (30) en contact avec le support pendant la dépose du cordon (71).

10. Produit programme d'ordinateur comprenant des instructions qui conduisent un dispositif de dépose (1) selon l'une quelconque des revendications 8 ou 9 à exécuter les étapes d'un procédé selon l'une quelconque des revendications 1 à 7.

## Patentansprüche

1. Verfahren zum Abgeben eines Strangs (71) einer viskosen Flüssigkeit auf einen Verlegeträger (7), das durch eine Abgabevorrichtung (1) implementiert wird, umfassend:
- einen mehrgelenkigen Roboter (2),
- ein System (3) zum Abgeben des Strangs (71) mittels einer Extrusionsdüse (30),
- eine Dosierpumpe (4), die das Abgabesystem (3) mit viskoser Flüssigkeit versorgt,
- einen Kreislauf (42) zum Versorgen der Extrusionsdüse (30) von der Dosierpumpe (4),
- ein Kontrollsystem (6), das den mehrgelenkigen Roboter (2), das Abgabesystem (3) und die Dosierpumpe (4) so steuert, dass ein Abgeben des Strangs (71) auf den Träger (7) entlang einer definierten Bahn (T), die gerade Längen und Kurven umfassen kann, in einer vorbestimmten Zeit ausgeführt wird, wobei der Träger (7) durch den mehrgelenkigen Roboter (2) gestützt wird und sich relativ zu dem Abgabesystem (3) bewegt, **dadurch gekennzeichnet, dass** das Verfahren die folgenden Schritte umfasst:
- Bestimmen
der Beziehung (A) zwischen der für die Dosierpumpe (4) benötigten Liefermenge und einer Verschiebungsgeschwindigkeit (V) des Trägers (7) zum Erhalten des gewünschten Strangquerschnitts,
- Bestimmen
einer Ansprechverzögerung (B) des Kreislaufs (42) zum Versorgen der Extrusionsdüse (30),
- Ausführen
eines anfänglichen Lernzyklus ohne Abgeben eines Strangs gemäß Sollwerten der Bahn (T) und Verschiebungsgeschwindigkeiten (V) des Trägers (7), während dessen an einer Anzahl (N) von Punkten der Bahn eine tatsächliche Verschiebungsgeschwindigkeit (Vr) des Trägers (7) an der Düse (30) bestimmt wird,
- Ausführen
eines Produktionszyklus mit dem Abgeben eines Strangs mit, an jedem der Punkte (N) der Bahn (T), einem korrigierten Sollwert der Liefermenge der Dosierpumpe (4), der die Ansprechverzögerung (B) und die tatsächliche Verschiebungsgeschwindigkeit (Vr) des Trägers, gewichtet durch die Beziehung (A), berücksichtigt.

2. Verfahren zum Abgeben eines Strangs (71) nach Anspruch 1,
**dadurch gekennzeichnet, dass** es ferner einen Schritt eines Überprüfens des Querschnitts des Strangs entlang der Bahn (T), dann einen Schritt zum optionalen Korrigieren der Ansprechverzögerung (B) des Kreislaufs (42) zum Versorgen der Düse (30) und/oder der Liefermenge der Dosierpumpe (4) in Abhängigkeit von der tatsächlichen Verschiebungsgeschwindigkeit (Vr) des Trägers (7) zum Ausführen des nächsten Produktionszyklus umfasst.

3. Verfahren zum Abgeben eines Strangs (71) nach Anspruch 1, wobei die Düse (30) eine Extrusionsöffnung aufweist, die es ermöglicht, einen Strang mit im Wesentlichen dreieckigem Querschnitt auszuführen, und die entlang einer Längsachse (X) davon ausrichtbar ist, **dadurch gekennzeichnet, dass** die Düse bei dem Abgeben des Strangs in Drehung um ihre Längsachse (X) herum gesteuert wird.

4. Verfahren zum Abgeben eines Strangs (71) nach einem der vorstehenden Ansprüche, **dadurch gekennzeichnet, dass** die Anzahl (N) von Punkten der Bahn durch eine Aufzeichnungsfrequenz (F) des Kontrollsystems (6) definiert wird, wobei diese kleiner als 100 ms und vorzugsweise kleiner als 30 ms ist.

5. Verfahren zum Abgeben eines Strangs (71) nach einem der vorstehenden Ansprüche, **dadurch gekennzeichnet, dass** die durchschnittliche Verschiebungsgeschwindigkeit des Trägers (7) über die Länge der Bahn (T) größer als oder gleich 600 mm/s ist.

6. Verfahren zum Abgeben eines Strangs (71) nach einem der vorstehenden Ansprüche, **dadurch gekennzeichnet, dass** die tatsächliche Verschiebungsgeschwindigkeit (Vr) des Trägers (7) zwischen 150 mm/s und 300 mm/s liegt, wenn die Bahn (T) einen Krümmungsradius von zwischen 12 und 16 mm besitzt.

7. Verfahren zum Abgeben eines Strangs (71) nach einem der vorstehenden Ansprüche, **dadurch gekennzeichnet, dass** die Extrusionsdüse (30) während des Abgebens des Strangs (71) in Kontakt mit dem Träger (7) gehalten wird.

8. Vorrichtung (1) zum Abgeben eines Strangs (71) einer viskosen Flüssigkeit auf einen Träger (7), die Vorrichtung (1) umfassend:
- einen mehrgelenkigen Roboter (2),
- ein System (3) zum Abgeben des Strangs (71) mittels einer Extrusionsdüse (30),
- eine Dosierpumpe (4), die das Abgabesystem (3) mit viskoser Flüssigkeit versorgt,
- einen Kreislauf (42) zum Versorgen der Extrusionsdüse (30) von der Dosierpumpe (4),
- ein Kontrollsystem (6), das zum Steuern des mehrgelenkigen Roboters (2), des Abgabesystems (3) und der Dosierpumpe (4) so konfiguriert ist, dass ein Abgeben des Strangs (71) auf den Träger (7) entlang einer definierten Bahn (T), die gerade Längen und Kurven umfassen kann, in einer vorbestimmten Zeit ausgeführt wird, wobei der Träger (7) durch den mehrgelenkigen Roboter (2) gestützt wird und sich relativ zu dem Abgabesystem (3) bewegt,
wobei die Vorrichtung (1) zum Implementieren eines Verfahrens zum Abgeben eines Strangs nach einem der vorstehenden Ansprüche konfiguriert ist.

9. Vorrichtung (1) zum Abgeben eines Strangs (71) nach Anspruch 8, **dadurch gekennzeichnet, dass** das Abgabesystem (3) ein Axialausgleichssystem (31) so umfasst, dass die Extrusionsdüse (30) während des Abgebens des Strangs (71) in Kontakt mit dem Träger gehalten wird.

10. Computerprogramm, umfassend Anweisungen, die eine Abgabevorrichtung (1) nach einem der Ansprüche 8 oder 9 dazu veranlassen, die Schritte eines Verfahrens nach einem der Ansprüche 1 bis 7 vorzunehmen.

## Claims

1. Method for depositing a bead (71) of a viscous fluid on a laying support (7) implemented by a depositing device (1) comprising:
- a poly-articulated robot (2),
- a system (3) for depositing the bead (71) by means of an extrusion nozzle (30),
- a metering pump (4) supplying the depositing system (3) with viscous fluid,
- a circuit (42) for supplying the extrusion nozzle (30) from the metering pump (4),
- a control system (6) controlling the poly-articulated robot (2), the depositing system (3) and the metering pump (4) so as to deposit the bead (71) on the support (7) along a defined trajectory (T) which can comprise straight lengths and curves in a predetermined time, the support (7) being carried by the poly-articulated robot (2) and moving relative to the depositing system (3), **characterized in that** the method comprises the following steps:
- determining
the relationship (A) between the flow rate necessary for the metering pump (4) and a movement speed (V) of the support (7) to obtain the desired section of the bead,
- determining
a response time (B) of the circuit (42) for supplying the extrusion nozzle (30),
- carrying out
an initial learning cycle, without depositing a bead, according to trajectory setpoints (T) and movement speeds (V) of the support (7) during which an actual movement speed (Vr) of the support (7) at the nozzle (30) is determined on a number (N) of points of the trajectory,
- carrying out
a production cycle, with the depositing of a bead having, at each of the points (N) of the trajectory (T), a corrected flow rate setpoint for the metering pump (4) taking into account the response time (B) and the actual movement speed (Vr) of the support, weighted by the relationship (A).

2. Method for depositing a bead (71) according to claim 1,
**characterized in that it** further comprises a step of verifying the section of the bead along the trajectory (T) and then a step of optionally correcting the response time (B) of the supply circuit (42) of the nozzle (30) and/or of the flow rate of the metering pump (4) on the basis of the actual movement speed (Vr) of the support (7) for carrying out the next production cycle.

3. Method for depositing a bead (71) according to claim 1, the nozzle (30) having an extrusion opening making it possible to produce a bead having a substantially triangular section and being orientable along a longitudinal axis (X) thereof, **characterized in that** the nozzle is controlled in rotation about its longitudinal axis (X) when the bead is laid.

4. Method for depositing a bead (71) according to any of the preceding claims, **characterized in that** the number (N) of points of the trajectory is defined by a recording frequency (F) of the control system (6), the latter being less than 100 ms and preferentially less than 30 ms.

5. Method for depositing a bead (71) according to any of the preceding claims, **characterized in that** the average movement speed of the support (7) is greater than or equal to 600 mm/sec along the length of the trajectory (T).

6. Method for depositing a bead (71) according to any of the preceding claims, **characterized in that** the actual movement speed (Vr) of the support (7) is between 150 mm/sec and 300 mm/sec when the trajectory (T) has a radius of curvature of between 12 and 16 mm.

7. Method for depositing a bead (71) according to any of the preceding claims, **characterized in that** the extrusion nozzle (30) is maintained in contact with the support (7) when the bead (71) is laid.

8. Device (1) for depositing a bead (71) of a viscous fluid on a support (7), the device (1) comprising:
- a poly-articulated robot (2),
- a system (3) for depositing the bead (71) by means of an extrusion nozzle (30),
- a metering pump (4) supplying the depositing system (3) with viscous fluid,
- a circuit (42) for supplying the extrusion nozzle (30) from the metering pump (4),
- a control system (6) configured to control the poly-articulated robot (2), the depositing system (3) and the metering pump (4) so as to deposit the bead (71) on the support (7) along a defined trajectory (T) which can comprise straight lengths and curves in a predetermined time, the support (7) being carried by the poly-articulated robot (2) and moving relative to the depositing system (3),
the device (1) being configured to implement a method for depositing a bead according to any of the preceding claims.

9. Device (1) for depositing a bead (71) according to claim 8,
**characterized in that** the depositing system (3) comprises an axial compensation system (31) so as to maintain the extrusion nozzle (30) in contact with the support when the bead (71) is laid.

10. Computer program product comprising instructions which cause a depositing device (1) according to any of claims 8 or 9 to execute the steps of a method according to any of claims 1 to 7.
